Europäisches Patentamt

European Patent Office

Office européen des brevets

(11) Publication number: **0 176 996 B1**

# EUROPEAN PATENT SPECIFICATION

(45) Date of publication of patent specification: 05.06.91

(51) Int. Cl.5 **G01F 1/68**, G01P 5/12, H01L 27/01, H01L 21/308

(21) Application number: 85112327.3

(22) Date of filing: 28.09.85

(54) Semiconductor device, in particular semiconductor sensor and method for its fabrication.

(30) Priority: 01.10.84 US 656301
01.10.84 US 656300

(43) Date of publication of application:
09.04.86 Bulletin 86/15

(45) Publication of the grant of the patent:
05.06.91 Bulletin 91/23

(84) Designated Contracting States:
DE FR GB IT NL

(56) References cited:
EP-A- 0 021 291
EP-A- 0 076 935
US-A- 4 478 076

IBM TECHNICAL DISCLOSURE BULLETIN, vol.
21, no. 8, January 1979, page 3227, New York,
US; K. MALIN et al.: "Mass flow meter"

(73) Proprietor: HONEYWELL INC.
Honeywell Plaza
Minneapolis Minnesota 55408(US)

(72) Inventor: Bohrer, Philip J.
2604 West 55th Street
Minneapolis, Minn. 55410(US)
Inventor: Johnson, Robert G.
12814 March Circle
Minnetonka, Minn. 55343(US)

(74) Representative: Rentzsch, Heinz et al
Honeywell Europe S.A. Holding KG Patent-
und Lizenzabteilung Kaiserleistrasse 55
W-6050 Offenbach am Main(DE)

## Description

The present invention relates to integrated semiconductor devices and in particular to semiconductor sensors of the class as described in EP-A 0 076 935. Such flow sensors provide high sensitivity flow sensing, particularly at low flow rates and include the features as listed in the pre-characterizing portion of claim 1. The depression provides substantial physical and thermal isolation between the transducer element and the semiconductor body. EP-A 0 021 291 shows a flow meter with the medium flowing across two electrical resistors, whereat the current increase required for maintaining a predetermined temperature difference between those resistors is used as measure of the flow rate. Those resistors together with two further resistors constitute a bridge circuit. The first mentioned measuring resistor and reference resistor are thin film resistors supported by a thin substrate.

IBM Technical Disclosure Bulletin, Vol. 21, No. 8, Jan. 1979 describes on page 3227 a mass flow meter consisting of a planar resistor structure with three rectangular meander resistors embedded into a silicon strip.

The present invention discloses in claim 1 an improved semiconductor device and in claim 13 a method for fabricating such semiconductor device. Preferred embodiments and improvements of the invention are described in the subclaims.

The semiconductor device comprises a semiconductor body with a first surface having a predetermined orientation with respect to a crystalline structure in the semiconductor body. The semiconductor body has a depression formed into the first surface of the body. A layer of thin film material covers at least a portion of the first surface. Diaphragm apparatus comprising the layer of thin film material and further comprising a static electric element forms a slotted diaphragm substantially covering the depression. The slotted diaphragm comprises at least one slot sized and oriented so that, in the fabrication of the device, an anisotropic etch placed on the slot will undercut the diaphragm and form the depression. The static electric element is substantially supported by the diaphragm and therefore is substantially thermally and physically isolated from the semiconductor body. The present invention further describes a method of fabricating a slotted diaphragm semiconductor device comprising a slotted diaphragm of thin film material substantially covering a depression etched into a first surface of a semiconductor body. The method comprises the steps of providing a semiconductor body with a first surface having a predetermined orientation with respect to a crystalline structure in the semiconductor body. The method further comprises applying a layer of thin film material of which thediaphragm is comprised onto the first surface and exposing an area of the first surface through a slot in the layer of the thin film material. The slot is sized and oriented so that an anisotropic etch placed on the exposed surface area will undercut the diaphragm and form the depression. The method also comprises applying the anisotropic etch to the exposed surface area to undercut the diaphragm and create the depression.

## BRIEF DESCRIPTION OF THE DRAWINGS

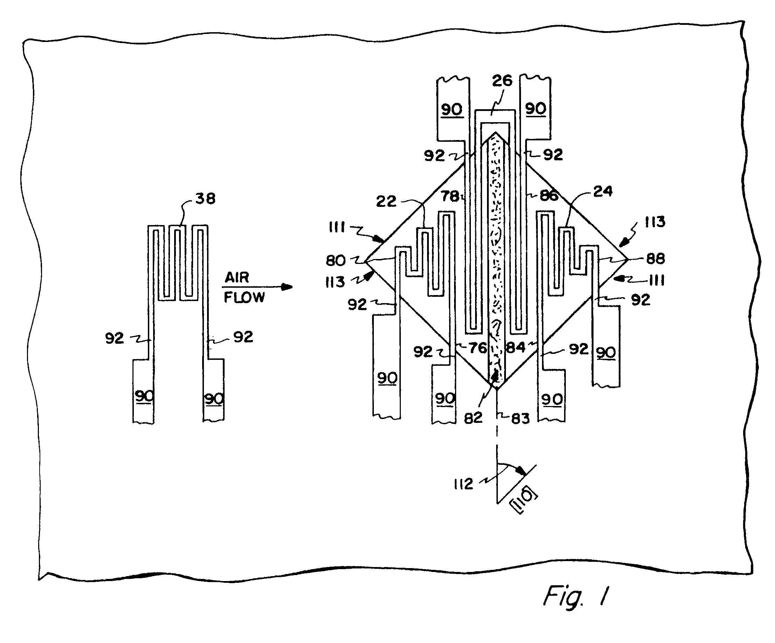

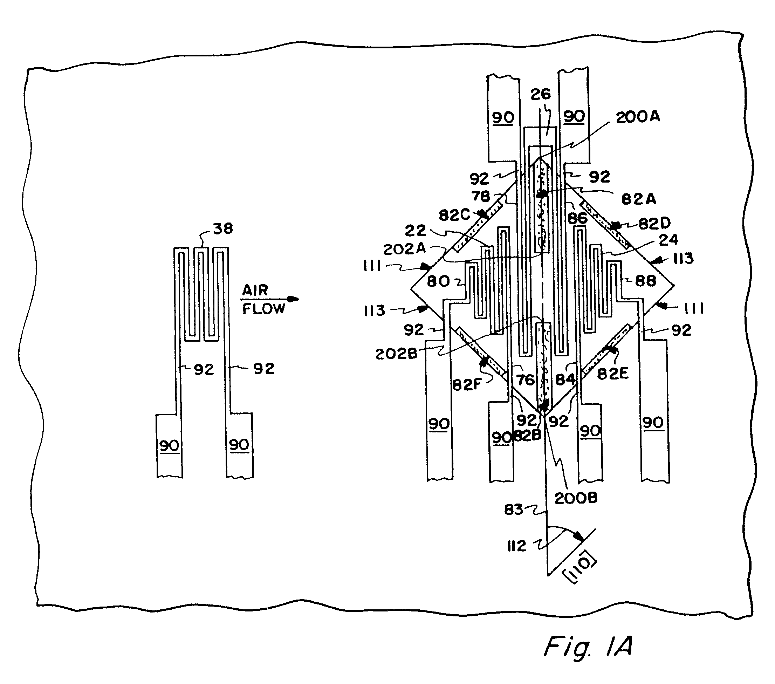

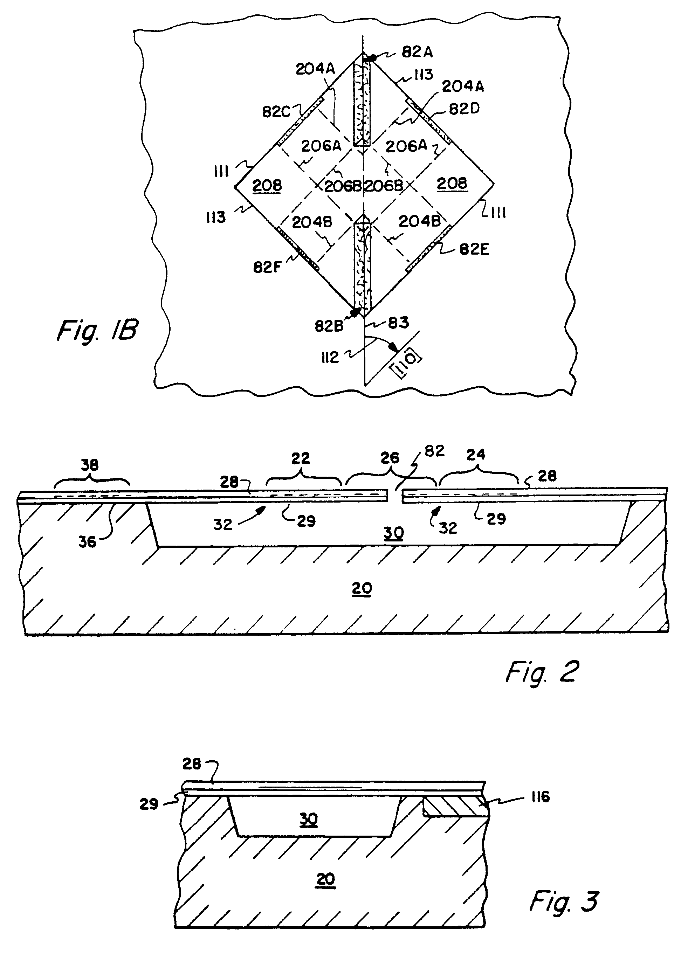

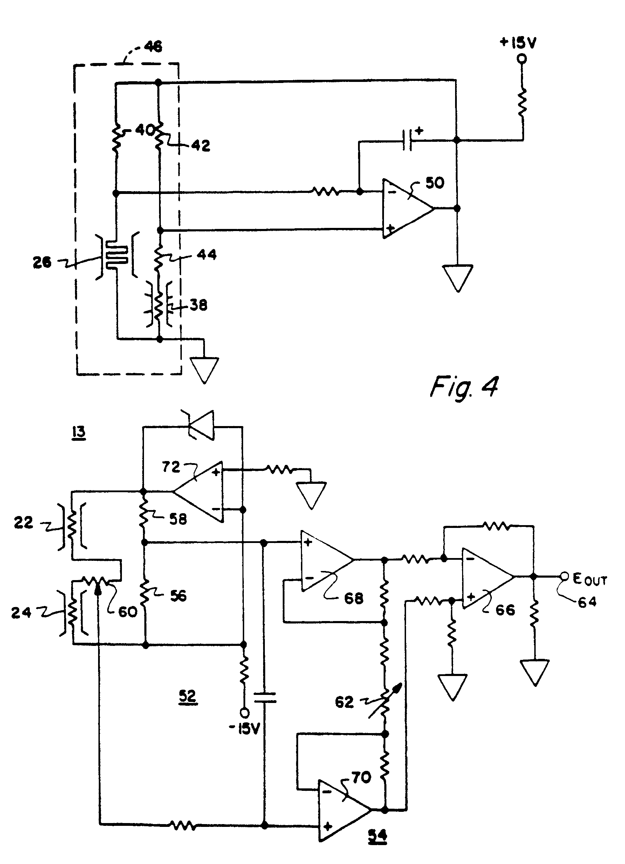

Figures 1-3 illustrate alternate preferred embodiments of flow sensors constructed in accordance with the present invention. Figure 4 illustrates circuitry for operating the disclosed flow sensor.

Structures in accordance with the present invention have many applications. The present invention is disclosed using an example of alternate preferred embodiments of a flow sensor compatible with the present invention. The present invention, however, is not limited to flow sensors.

Structures in accordance with the present invention typically comprise static electric, thermal-to-electric, and/or electric-to-thermal elements, supported by a slotted diaphragm substantially covering a depression in a semiconductor body.

The present invention comprises an integrated semiconductor device comprising a semiconductor body 20 with a first surface 36 having a predetermined orientation with respect to a crystalline structure in the semiconductor body. Semiconductor body 20 has a depression 30 formed into first surface 36 of the body. The present invention further comprises a layer 29 of thin film material covering at least a portion of first surface 36.

The present invention further comprises diaphragm means 32 comprising layer 29 of thin film material and further comprising a static electric, thermal-to-electric, or electric-to-thermal element such as elements 22, 24 and 26 further discussed below. Diaphragm means 32 forms a slotted diaphragm 32 substantially covering depression 30. Slotted diaphragm 32 comprises a slot 82 sized and oriented so that, in the fabrication of the device, an anisotropic etch placed on slot 82 will undercut diaphragm 32 and form depression 30. The static electric, thermal-to-electric, or electric-to-thermal element is substantially supported by diaphragm 32 and, therefore, is substantially thermally and physically isolated from semiconductor body 20.

In a preferred embodiment, the present invention comprises a semiconductor body 20 having a depression 30 formed into a first surface 36 of body 20, semiconductor body 20 comprising (100) silicon and having a (100) plane and a [110] direction, first surface 36 of semiconductor body 20 being substantially parallel to the (100) plane. The preferred embodiment of the present invention further comprises a layer 29 of thin film material covering at least a portion of first surface 36. The preferred embodiment further comprises diaphragm means 32 comprising layer 29 of thin film material and further comprising a static electric, thermal-to-electric, or electric-to-thermal element such as 22, 24 or 26 as further discussed below. Diaphragm means 32 comprises a slotted diaphragm 32 substantially covering depression 30, the slotted diaphragm comprising slot 82 oriented at an angle 112 of substantially 45 degrees to the [110] direction and extending across depression 30 at the approximate center of the depression. The static electric, thermal-to-electric, or electric-to-thermal element is substantially supported by diaphragm 32 and, therefore is substantially thermally and physically isolated from semiconductor body 20.

As will be further discussed below, the present invention is adaptable to being configured as a flow sensor. In such configurations, a thin film heater 26 is supported over depression 30 by diaphragm 32. In the preferred embodiment, approximately half of heater 26 is located on each side of slot 82. The preferred embodiment of the present flow sensor further comprises a pair of thin film heat sensors 22 and 24 supported by diaphragm 32. In the preferred embodiment, the thin film heat sensors 22 and 24 are disposed on opposite sides of heater 26.

The present invention further comprises a method of fabricating a slotted diaphragm semiconductor device comprising a slotted diaphragm 32 of thin film material 29 substantially covering a depression 30 etched into a first surface 36 of a semiconductor body 20. The method comprises the steps of providing a semiconductor body 20 with a first surface 36 having a predetermined orientation with respect to a crystalline structure in the semiconductor body. The method further comprises applying a layer 29 of thin film material of which diaphragm 32 is comprised onto first surface 36. An area of first surface 36 is exposed through a slot 82 in layer 29 of the thin film material. Slot 82 is sized and oriented so that an anisotropic etch placed on the exposed surface area will undercut diaphragm 32 and form depression 30. The method further comprises applying the anisotropic etch to the exposed surface area to undercut diaphragm 32 and create depression 30. A preferred method of practicing the present invention comprises providing a semiconductor body 20 comprising (100) silicon and having a (100) plane and a [110] direction, first surface 36 of the semiconductor being substantially parallel to the (100) plane. The preferred method further comprises providing a layer of thin film material of which diaphragm 32 is comprised onto first surface 36. An area of first surface 36 is exposed through a slot 82 in the layer of thin film material. Slot 82 is oriented at substantially 45 degrees to the [110] direction. The slot has a length which determines the maximum width of depression 30 as measured along the slot oriented at substantially 45 degrees to the [110] direction. An anisotropic etch is applied to the exposed surface area to undercut diaphragm 32 and create depression 30.

In a further preferred embodiment of the present invention, depression 30 is bounded at first surface 36 by a substantially square configuration comprising four substantially perpendicular boundary edges 111 and 113, each of the four substantially perpendicular boundary edges being substantially in line with or substantially perpendicular to the [110] direction.

In this embodiment, slotted diaphragm 32 comprises slot means comprising first and second slots 82A and 82B located on a line 83 oriented at an angle 112 of substantially 45 degrees to the [110] direction. Each of first and second slots 82A and 82B comprise a first end 200A and 200B respectively, first and second slots 200A and 200B being located at a maximum width of depression 30 as measured along line 83. Each of the first and second slots 82A and 82B have a second end 202A and 202B respectively, ends 202A and 202B being located so that each of the first and second slots 82A and 82B extend only a portion of the distance across the maximum width of depression 30 as measured along line 83.

The further preferred embodiment further comprises third, fourth, fifth and sixth slots 82C, 82D, 82E and 82F oriented substantially in line with or substantially perpendicular to the [110] direction, there being one of the third, fourth, fifth and sixth slots located at the substantial center of each of the four boundary edges 111 and 113. Each of the third, fourth, fifth and sixth slots 82C, 82D, 82E and 82F have a length sufficient to permit undercutting of diaphragm 32 when isotropic etch is placed on each of the six slots as is further explained below.

When configured as a flow sensor, the further preferred embodiment comprises a thin film heater 26 supported over depression 30 by diaphragm 32. Approximately half of heater 26 is located on each side of line 83. In that embodiment, a pair of thin film heat sensors 22 and 24 are supported by diaphragm 32, thin film heat sensors 22 and 24 being disposed on opposite sides of heater 26.

The method of fabricating the further preferred embodiment comprises exposing first and second areas of first surface 36 through first and second slots 82A and 82B in layer 29 of the thin film material. First and second slots 82A and 82B are located on a line 83 oriented at substantially 45 degrees to the [110] direction. Each of the first and second slots 82A and 82B comprise a first end 200A and 200B respectively located at a maximum width of depression 30 as measured along line 83. Each of the first and second slots 82A and 82B have a second end 200A and 200B respectively located so that each of the first and second slots extends only a portion of the distance across the maximum width of the depression as measured along line 83.

Third, fourth, fifth and sixth areas of first surface 36 are exposed through third, fourth, fifth and sixth slots 82C, 82D, 82E and 82F in thin film layer 29. The third, fourth, fifth and sixth slots 82C, 82D, 82E and 82F are oriented substantially in line or substantially perpendicular to the [110] direction, there being one of the third, fourth, fifth and sixth slots 82C, 82D, 82E and 82F located at the substantial center of each of the four boundary edges 111 and 113. Each of the third, fourth, fifth and sixth slots have a length sufficient to permit undercutting of diaphragm 32 when an anisotropic etch is placed on each of the six slots. The anisotropic etch is applied to the exposed surface areas to undercut diaphragm 32 and create depression 30.

Body 20 is preferrably a semiconductor body and preferrably silicon, chosen because of its adaptability to precision etching techniques and ease of electronic chip producibility. The preferred embodiment of a flow sensor in accordance with the present invention preferrably includes two identical temperature sensing resistor grids 22 and 24 acting as thin film heat sensors and further includes a centrally located heater resistor grid 26 acting as a thin film heater. Sensors 22 and 24 and heater 26 are preferrably fabricated of nickel-iron, herein sometimes referred to as permalloy, having a preferred composition of 80 percent nickel and 20 percent iron. The sensor and heater grids are typically encapsulated in a thin film of dielectric, typically comprising layers 28 and 29 and preferrably silicon nitride to form thin film diaphragms 32. The preferred embodiment of devices fabricated in accordance with the present invention further comprise an accurately defined air space 30 between diaphragm 32 and semiconductor body 20. Air space 30 effectively results in an area space on each side of diaphragm 32. Effectively placing an air space on each side of diaphragm 32 is achieved by fabricating the structure on silicon surface 36, and by subsequently etching an accurately defined air space 30 into silicon body 20 beneath diaphragm 32.

In the embodiment illustrated in Figure 1, slot 82 cut through nitride layer 29 to expose an area of first surface 36 can be quite narrow, 5 microns for example. The anisotropic etch removes the silicon in the form of a square depression 30 bounded by substantially perpendicular boundary edges 111 and 113, boundary edges 111 illustrated being substantially in line with the [110] direction and boundary edges 113 as illustrated being substantially perpendicular to the [110] direction. The width of slot 82 can be quite narrow, 5 microns for example, although a wider slot will provide more rapid diffusive removal of etch product and thus reduce the time required to complete depression 30.

In the embodiment illustrated in Figure 1A, the longer slot 82 illustrated in Figure 1 is divided into two shorter slots 82A and 82B with a broad section of silicon nitride supporting film (layers 28 and 29) connecting the right and left sides of diaphragm 32. This connection furher strengthens the silicon nitride supporting film and further prevents penetration of airflow under the more vulnerable central part of diaphragm 32. Accordingly, the embodiment of Figure 1A is stronger for high velocity flow applications than the embodiment of Figure 1.

However, slots 82A and 82B by themselves do not permit the anisotropic etch formation of the entire desired diaphragm 32 because the corresponding etch pits that would be created from slots 82A and 82B are limited to the vicinity of these slots as shown by dashed lines 204A and 204B respectively in Figure 1B. Thus, it is necessary to form slots 82C, 82D, 82E and 82F approximately centrally located on boarder edges 111 and 113 and having a sufficient length so that the depressions formed through slots 82C, 82D, 82E and 82F slightly overlap the local depressions formed through slots 82A and 82B. After the depressions adjacent to slots 82A and 82B are formed (these local depressions being defined by dashed lines 204A and 204B respectively), a second stage of etching begins, and the depression bounded previously by dashed line 204A is enlarged to a larger depression bounded by dashed line 206A; similarly, the depression previously bounded by dashed line 204B is enlarged to a larger depression now bounded by dashed line 206B and overlapping the depression bounded by line 206A. The final depression dimensions are formed in a third and last stage of etching where regions 208 are etched out, thus resulting in a square depression having the same dimensions as in Figure 1.

Slots 82C, 82D, 82E and 82F can be even narrower than slots 82A and 82B, 3 microns for example, because the diffusive access of the anisotropic etch to the space beneath the diaphragm can be adequately provided by slots 82A and 82B, and the additional access provided by slots 82C, 82D, 82E and 82F only speed up the etching process.

The operation of the present sensor in sensing air flow can be described with reference to Figure 1. Heater resistor grid 26 operates at a preferred constant average temperature difference of 100-200 degrees centigrade elevated above the temperature of silicon chip 20 which temperature is not appreciably different from the ambient air stream temperature.

In the preferred embodiment illustrated, sensor grids 22 and 24 are precisely symmetrically located with respect to heater grid 26 so that at zero airflow they have identical temperatures and have no differences between their resistances. Consequently, a small probe current, 0.1-1.0 milli-amperes preferred, through both sensor resistances 22 and 24 will develop no voltage difference at zero airflow velocity.

With airflow present, upstream sensor 22 will be cooled by the transportation of heat away from sensor 22 toward heater resistor grid 26, whereas downstream sensor 24 will be heated by a transportation of heat toward the sensor from heat resistor grid 26. Consequently, a resistance difference between sensor resistances 22 and 24 will be present with a corresponding difference in voltage drop which is a measure of the air flow. Typical unamplified voltage differences can be as high as 0.1 volt at a 1500 feet/minute flow velocity.

In the preferred operation of the present sensor, sensors 22 and 24 are operated with constant current such that temperature field changes can be sensed under flow conditions as previously described. Other operating arrangements are also possible.

Because of the exceedingly small thermal mass of the heater and sensor element structure and the thermal insulation provided by the thin silicon nitride connecting means to the supporting silicon body, and because of the surrounding air space, response time of the present sensor is very short, with response time constants of 0.005 seconds having been measured. Consequently, sensor elements 22 and 24 can respond very rapidly to air flow changes.

In the preferred embodiment of the present sensor, ambient temperature is monitored by a reference resistor 38 which is heat sunk onto semiconductor body 20. Resistor 38 may be a permalloy grid formed substantially like grids 22, 24 and 26 and is typically encapsulated in dielectric layers 28 and 29 and mounted on surface 36.

The typical 0.8 micron total thickness of dielectric layers 28 and 29 is very thin and, accordingly, permits relatively good heat conduction and transfer perpendicular to the layers to and from resistive grids 22, 24, 26 and 38. Thus, reference resistor 38, being attached by the encapsulating dielectric directly to surface 36 of semiconductor body 20, readily monitors the temperature of the semiconductor body, which stays within 0.5 degrees centigrade of ambient temperature even with resistor grid 26 elevated to 200 degrees centigrade above ambient. Accordingly, heat sunk reference resistor 38 may be used to monitor ambient air flow temperature by monitoring a temperature that is very close to that of semiconductor body 20, which in turn is very close to ambient temperature.

As previously indicated in the preferred operation of the present sensor, heater 26 is operated at a constant temperature above ambient temperature, sensors 22 and 24 being operated at constant current, and the changing temperatures of sensors 22 and 24 are sensed as changes in resistance. Circuits for accomplishing these functions are illustrated in Figure 4. The smaller circuit controls the temperature of heater 26 while the larger circuit provides an output voltage that is proportional to the resistance difference between heat sensing resistors 22 and 24.

The heater control circuit illustrated in Figure 4, upper portion, uses a wheatstone bridge 46 to maintain heater 26 at a constant temperature rise above ambient as sensed by heat sunk reference resistor 38. Wheatstone bridge 46 is shown comprising heater resistor 26 and a resistor 40 in its first leg and a resistor 42, heat sunk resistor 38 and a resistor 44 in its second leg. An error integrator comprising amplifier 50 keeps bridge 46 balanced by varying the potential across it and thus the power dissipated in heater 26.

The circuitry shown in Fig. 4, lower portion, which monitors the resistance difference between downstream sensor 24 and upstream sensor 22 includes a constant current source 52 comprising an amplifier 72 and a differential amplifier 54 comprising amplifier 68 and 70. The constant current source drives a wheatstone bridge comprising two high impedance resistors 56 and 58 in one leg and the two sensing resistors 22 and 24 with a nulling potentiometer 60 in the other leg. The gain of differential amplifier 54 is adjusted by potentiometer 62. Output 64 provides a voltage that is proportional to the resistance difference between the two sensing resistors 22 and 24.

Amplifiers 50, 66 and 72 may each comprise one-fourth of an LM324. Amplifiers 68 and 70 may each comprise one-half of an OP-10.

Upstream sensor resistor 22 preferably has an inner edge 76 in close proximity (5 to 10 microns, for example) to the near edge 78 of heater resistor grid 26. At such a separation from near edge 78 of heater resistor grid 26, the zero flow air temperature near heater resistor edge 78 is close to that of edge 78. In a typical embodiment, where sensors 22 and 24 have a width of approximately 100 microns, outer edge 80 of sensor resistor grid 22 is located approximately 100 microns from near edge 78 of heater resistor grid 26. At the 100 micron separation, the zero airflow temperature is closer to that of the ambient air stream and to that of silicon chip 20 than it is to the temperature of heater resistor 26.

Therefore, outer edge 80 of sensor resistor grid 22 is easily cooled to near the limiting temperature of silicon chip 20 by low velocity airflow, whereas the inner regions of sensor resistor grid 22 (near edge 76) are more tightly coupled thermally to heater resistor 26 and respond more readily to the higher airflow velocity before the limiting temperature of the ambient airstream is approached. Accordingly, the composite effect of the temperature change from each resistor grid line (lines spaced over the approximately 5-100 micron distance from heater edge 76) for an increment of airflow is to keep the corresponding increment on the upstream resistor temperature response curve more nearly constant over a broad airflow range.

As shown in Figure 1, area 82 (and areas 82A-82F) are cut in the silicon nitride to facilitate etching as further described below. Overall geometry, including that of leads 92, is preferably made symmetrically to insure symmetrical heat conduction properties. Leads 92 connect to pad areas 90 for electrically connecting sensor elements 22, 24, 26, and 38 with circuitry 13 as previously discussed.

Elements 22 and 24 have a preferred resistance in one example of 1200 ohms and element 26 has a preferred resistance in that example of 520 ohms. In this embodiment, sensors 22 and 24 have a width of approximately 100 microns and a length of approximately 175 microns. As previously indicated, in this example the proximal edges of sensors 22 and 24 are in close proximity (e.g., 5-10 microns) away from heater 26. That is, edge 76 of sensor 22 is 5-10 microns away from edge 78 of heater 26, and edge 84 of sensor 24 is 5-10 microns away from edge 86 of heater 26.

As with other dimensions listed in the present application, the above dimensions are preferred dimensions which have been used in actual devices and are not deemed to be limiting, since these parameters could be substantially varied depending upon application.

The preferred process of fabricating the present sensor comprises providing a (100) silicon wafer 20 having a surface 36 which receives a layer 29 of silicon nitride. Layer 29 is typically 4000 angstroms thick and is typically deposited by standard sputtering techniques in a low pressure gas discharge. Next, a uniform layer of permalloy, typically 80% nickel and 20% iron and 800 angstroms thick, is deposited on the silicon nitride by sputtering.

Using a suitable photo mask, a photoresist and a suitable etchant, permalloy elements such as 22, 24, 26 and 38 are delineated. A second layer 28 of silicon nitride, typically 4000 angstroms thick, is then sputter-deposited to provide complete coverage of the permalloy configuration and thus protect the resistive element from oxidation. Openings such as 82 and 82A-82F are then etched through the nitride to the (100) silicon surface in order to delineate slotted diaphragm 32. The relative sizes of openings such as 82 and 82A-82F are largely a matter of design choice.

Anisotropic etchant that does not appreciably attack the silicon nitride is used to etch out the silicon in a controlled manner from beneath diaphragm 32 (KOH plus Isopropyl alcohol is a suitable etchant). The sides of the etched depression such as 30 are bounded by (111) and other crystal surfaces that are resistive to the etchant. The depression bottom, a (100) surface which is much less resistant to the etchant, is located at a specified distance (e.g., 125 microns) from the members, typically by adjusting the duration of the etch. A doped silicon etch stop (e.g., a boron-doped layer) may also be used to control the depth of the depression, although such stops are not typically necessary when fabricating the present sensor. By adjusting the duration of the etch, the depth of depressions such as 30 can be controlled to a precision of about three microns or to about two percent. This precision results in a precise reproducibility of the thermal conductance of the air space surrounding diaphragm 32 and a correspondingly precise reproducibility of air flow response.

Figure 3 shows a region 116 for integration of circuitry, for example, portions of the circuitry illustrated in Figure 6.

For the embodiments shown, diaphragm 32 is typically 0.8 - 1.2 microns thick. Typical permalloy elements such as elements 22, 24, 26 and 38 have a thickness of approximately 800 angstroms (typically in the range of approximately 800 angstroms to approximately 1600 angstroms) with a preferred composition of 80% nickel and 20% iron and a resistance value within the range of approximately 200 ohms to approximately 2000 ohms at room temperature, e.g., at approximtely 20-25 degrees centigrade (at permalloy element temperatures up to approximately 400 degrees centigrade resistance values increase by a factor of up to approximately 3). Line widths within permalloy grids may be approximately 5 microns with a 5 micron spacing. Depressions such as 30 typically have a .005 inch (125 micron) depth spacing between members such as 32 and 34 and the semiconductor body such as 20, but the spacing can easily vary in the range of approximately .001 inch to approximately .010 inch. A typical thickness of the semiconductor body or substrate such as 20 is .008 inch. (As previously indicated, dimensions provided are illustrative only and are not to be taken as limitations.)

Typical operating temperatures of heater elements such as 26 are in the range of approximately 100-200 degrees centigrade with approximately 160 degrees centigrade above ambient being the preferred operating temperature. Using the preferred permalloy element, this can be accomplished with only a few milliwatts of input power.

A heater resistance element having a 200-1000 ohm preferred resistance at 25 degrees centigrade provides the desired power dissipation to achieve the preferred operating temperature at a convenient voltage of a few volts and a convenient current of, for example, 2 to 5 milliamperes.

## Claims

1. An integrated semiconductor device comprising:

   a semiconductor body (20) with a first surface (36) having a predetermined orientation with respect to a crystalline structure in the semiconductor body, the semiconductor body having a depression (30) formed into the first surface of the body;

   a layer (29) of thin film dielectric material covering at least a portion of the first surface (36); and

   a diaphragm (32) substantially covering the depression (30) and comprising the layer (29) of thin film material and further comprising a transducer element (22, 24, 26),

   **characterized in that**

   a) the diaphragm (32) comprises at least one slot (82; 82A, 82B) extending across the diaphragm from one extremity to the other;

   b) the at least one slot is substantially centered on the diaphragm and has first and second outer ends (200A, 200B) intersecting the first surface (36) of the semiconductor body (20); and

   c) the at least one slot is oriented such that, when in the fabrication of the device an anisotropic etchant is placed on the slot for forming the depression (30), this etchant will undercut the diaphragm (32) so far until it reaches a crystal surface that is resistant to the etchant.

2. A device according to claim 1, **characterized in that** the semiconductor body (20) comprises (100) silicon and has a (100) plane and a [110] direction, the first surface (36) of the semiconductor body being substantially parallel to the (100) plane; and the slot (82) is oriented at substantially 45 degrees to the [110] direction and extends across the depression (30) at the approximate center of the depression.

3. The device according to claim 1 or 2, **characterized in that** the depression (30) is bounded at the first surface (36) by a substantially square configuration comprising four substantially perpendicular boundary edges (111, 113), each of the four substantially perpendicular boundary edges being substantially in line with or substantially perpendicular to the [110] direction,

   that the slotted diaphragm (32) comprises first and second slots (82A, 82B) located on a line (83) oriented at substantially 45 degrees to the [110] direction;

   that each of the first and second slots comprises a first end (200A, 200B) located at a maximum width of the depression (30) as measured along the line (83) oriented at substantially 45 degrees to the [110] direction,

   that each of the first and second slots (82A, 82B) has a second end (202A, 202B) located so that each of the first and second slots extends only a portion of the distance across the maximum width of the depression as measured along the line (83) oriented at substantially 45 degrees to the [110] direction;

   that further third, fourth, fifth and sixth slots (82C to 82F) are provided oriented substantially in line with or substantially perpendicular to the [110] direction, there being one of the third, fourth, fifth and sixth slots located at the substantial center of each of the four boundary edges (111, 113);

   and that each of the third, fourth, fifth and sixth slots (82C to 82F) has a length sufficient to permit undercutting of the diaphragm when an anisotropic etch is placed on each of the six slots.

4. The device according to claim 3 for use as a flow sensor, **characterized by**

   a thin film heater (26) supported over the depression (30) by the diaphragm (32), approximately half of the heater being located on each side of the slot (82); and

   a pair of thin film heat sensors (22, 24) supported by the diaphragm (32), the thin film sensors being disposed on opposite sides of the heater (26).

5. The device according to claim 4, **character-**

ized in that the heater (26) is operated at a temperature elevated above ambient, thus creating a no-flow temperature gradient in the air above and adjacent to the heater, the temperature within the no-flow gradient making a transition between the elevated temperature and substantially ambient temperature;

and that the sensors (22, 24) are located sufficiently close to the heater (20) to be located substantially within the no-flow temperature gradient.

6. The device according to claim 4 or 5, **characterized in that** the proximal edges of the sensors (22, 24) are located from the near edges of the heater (26) at a distance within the range of approximately 5 microns to approximately 25 microns.

7. The device according to one of the claims 1 to 6, **characterized in that** the transducer element (22, 24, 26) comprises a permalloy element.

8. The device according to claim 7, **characterized in that** the permalloy element has a thickness in the range of approximately 800 angstroms to approximately 1,600 angstroms.

9. The device according to one of the claims 1 to 8, **characterized in that** the layer (29) of thin film material comprises a dielectric material, preferably silicon nitride.

10. The device according to claim 9, **characterized in that** the dielectric material has a thickness in the range of approximately 0.8 micron to approximately 1.2 microns.

11. The device according to one of the claims 4 to 10, **characterized in that** each permalloy element (22, 24, 26) has a resistance in the range of approximately 200 ohms to approximately 2000 ohms at approximatly 25° C.

12. The device according to one of the claims 4 to 11, **characterized in that** the heater (26) and each sensor (22, 24) comprise a resistive element having a pattern of resistive material formed in lines having a line width, the lines being separated by substantially a line width, the sensors being separated from the heater by a distance in the range of approximately one line width to approximately five line widths.

13. A method of fabricating a slotted diaphragm semiconductor device according to one of the preceding claims,

characterized by the steps of:

a) providing a semiconductor body (20) with a first surface (36) having a predetermined orientation with respect to a crystalline structure in the semiconductor body;

b) applying a layer (29) of thin film material of which the diaphragm (32) is comprised onto the first surface (36);

c) exposing an area of the first surface to form at least one slot in the layer of thin film material with

c1) the at least one slot extending across the diaphragm from one extremity to the other,

c2) the at least one slot being substantially centered on the diaphragm,

c3) the at least one slot having first and second outer ends (200A, 200B) intersecting the first surface (36) of the semiconductor body (20); and

c4) the at least one slot being oriented such that when in the fabrication of the device, an anisotropic etchant is placed on the slot for forming the depression (30), this etch will undercut the diaphragm (32) so far until it reaches a crystal surface that is resistant to the etchant;

d) applying the anisotropic etch to the exposed surface area to undercut the diaphragm (32) and create the depression (30).

14. The method according to claim 13, **characterized by** the steps of:

providing a semiconductor body (20) comprising (100) silicon and having a (100) plane and a [110] direction, the first surface (36) of the semiconductor body being substantially parallel to the (100) plane;

providing a layer (29) of thin film material of which the diaphragm is comprised onto the first surface (36);

exposing an area of the first surface through a slot in the layer of thin film material, the slot being oriented at substantially 45 degrees to the [110] direction, the slot having a length which determines the maximum width of the depression as measured along the slot oriented at substantially 45 degrees to the [110] direction; and applying an anisotropic etch to the exposed surface area to undercut the diaphragm and create the depression.

15. The method according to claim 14 for fabricating a slotted diaphragm semiconductor device, whereat the depression is bounded at the first surface by a substantially square configuration comprising four substantially perpendicular boundary edges (111, 113), each of the four substantially perpendicular boundary edges being substantially in line with or substantially perpendicular to a [110] direction in the semiconductor body; **characterized by** the steps of:

exposing first and second areas of the first surface through first and second slots in the layer of thin film material, the first and second slots being located on a line oriented at substantially 45 degrees to the [110] direction, each of the first and second slots comprising a first end located at a maximum width of the depression as measured along the line oriented at substantially 45 degrees to the [110] direction, each of the first and second slots having a second end located so that each of the first and second slats extends only a portion of the distance across the maximum width of the depression as measured along the line oriented at substantially 45 degrees to the [110] direction;

exposing third, fourth, fifth and sixth areas of the first surface through third, fourth, fifth and sixth slots oriented substantially in line with or substantially perpendicular to the [110] direction, there being one of the third, fourth, fifth and sixth slots located at the substantial center of each of the four boundary edges, each of the third, fourth, fifth and sixth slots having a length sufficient to permit undercutting of the diaphragm when an anisotropic etch is placed on each of the six slots; and

applying the anisotropic etch to the exposed surface areas to undercut the diaphragm and create the depression.

## Revendications

1.  Dispositif semiconducteur intégré comprenant :
    un corps semiconducteur (20) possédant une première surface (36) ayant une orientation prédéterminée par rapport à une structure cristalline du corps semiconducteur, un renfoncement (30) étant ménagé dans la première surface du corps semiconducteur;
    une couche (29) sous la forme d'une pellicule mince d'un matériau diélectrique recouvrant au moins une partie de la première surface (36); et
    un diaphragme (32) recouvrant pour l'essentiel le renfoncement (30) et comportant la couche (29) du matériau en forme de pellicule mince et en outre un élément transducteur (22,24,26), caractérisé en ce que

    a) le diaphragme (32) comprend au moins une fente (82;82A, 82B) qui s'étend en travers du diaphragme d'une extrémité à l'autre;

    b) au moins une fente est sensiblement centrée sur le diaphragme et possède des première et seconde extrémités extérieures (200A,200B) recoupant la première surface (36) du corps semiconducteur (20); et

    c) au moins une fente est orientée de telle sorte que, lorsqu'un agent corrosif anisotrope est placé dans la fente lors de la fabrication du dispositif afin de former le renfoncement (30), cet agent corrosif réalise une corrosion sous-jacente au-dessous du diaphragme (32) jusqu'à ce qu'il atteigne une surface cristalline résistante à cet agent corrosif.

2.  Dispositif selon la revendication 1, caractérisé en ce que le corps semiconducteur (20) est constitué par du silicium (100) et a un plan (100) et une direction [110], la première surface (36) du corps semiconducteur étant sensiblement parallèle au plan (100); et
    la fente (82) est orientée sensiblement à 45 degrés par rapport à la direction [110] et s'étend en travers du renfoncement (30) approximativement au centre de ce dernier.

3.  Dispositif selon la revendication 1 ou 2, caractérisé en ce que le renfoncement (30) est délimité, au niveau de la première surface (36), par une configuration sensiblement carrée comprenant quatre bords limites (111, 113) sensiblement perpendiculaires, dont chacun est sensiblement aligné avec ou sensiblement perpendiculaire à la direction [110],
    que le diaphragme fendu (32) comprend des première et seconde fentes (82A,82B) situées sur une droite (83) orientée sensiblement à 45 degrés par rapport à la direction [110]; que chacune des première et seconde fentes comprend une première extrémité (200A,200B) située à une largeur maximale du renfoncement (30), mesurée le long de la droite (83) orientée sensiblement à 45 degrés par rapport à la direction [110],
    que chacune des première et seconde fentes (82A,82B) possède une seconde extrémité (202A, 202B) située de telle sorte que chacune des première et seconde fentes s'étend seulement sur une partie de la distance de l'étendue en largeur maximale du renfoncement, mesurée le long de la droite (83) orientée sensiblement à 45 degrés par rapport à la direction [110];
    qu'il est prévu d'autres troisième, quatrième, cinquième et sixième fentes (82C à 82F) orientées sensiblement en étant alignées avec ou sensiblement perpendiculaire à la direction [110], l'une des troisième, quatrième, cinquième et sixième fentes étant située sensiblement au centre de chacun des quatre bords limites (111, 113); et

que chacune des troisième, quatrième, cinquième et sixième fentes (82C à 82F) possède une longueur suffisante pour permettre une corrosion sous-jacente au-dessous du diaphragmelorsqu'un agent corrosif anisotrope est placé dans chacune des six fentes.

4. Dispositif selon la revendication 3, destiné à être utilisé en tant que capteur d'écoulement, caractérisé par

un dispositif de chauffage à pellicule mince (26) supporté au-dessus du renfoncement (30) par le diaphragme (32), environ la moitié du dispositif de chauffage étant située de chaque côté de la fente (82); et

un couple de capteurs thermiques à pellicule mince (22,24) supportés par le diaphragme (32), les capteurs à pellicule mince étant disposés sur des côtés opposés du dispositif de chauffage (26).

5. Dispositif selon la revendication 4, caractérisé en ce que le dispositif de chauffage (26) fonctinne à une température élevée supérieure à la température ambiante, ce qui crée un gradient de température sans écoulement dans l'air au-dessus et au voisinage du dispositif de chauffage, la température de gradient sans écoulement établissant une transition entre la température élevée et sensiblement la température ambiante; et

que les capteurs (22,24) sont situés suffisamment proches du dispositif de chauffage (20) pour être situés sensiblement à l'intérieur du gradient de température sans écoulement.

6. Dispositif selon la revendication 4 ou 5, caractérisé en ce que les bords proximaux des capteurs (22,24) sont séparés des bords proches du dispositif de chauffage (26) par une distance située dans la gamme comprise entre environ 5 microns et environ 25 microns.

7. Dispositif selon l'une des revendications 1 à 6, caractérisé en ce que l'élément transducteur (22,24,26) comprend un élément en permalloy.

8. Dispositif selon la revendication 7, caractérisé en ce que l'élément en permalloy possède une épaisseur située dans la gamme comprise entre environ 800 angströms et environ 1600 angströms.

9. Dispositif selon l'une des revendications 1 à 8, caractérisé en ce que la couche (29) formée d'un matériau en forme de pellicule mince comprend un matériau diélectrique, de préférence du nitrure de silicium.

10. Dispositif selon la revendication 9, caractérisé en ce que le matériau diélectrique possède une épaisseur située dans la gamme comprise entre environ 0,8 micron et environ 1,2 micron.

11. Dispositif selon l'une des revendications 4 à 10, caractérisé en ce que chaque élément en permalloy (22, 24, 26) possède une résistance située dans la gamme comprise entre environ 200 ohms et environ 2000 ohms à environ 25° C.

12. Dispositif selon l'une des revendications 4 à 11, caractérisé en ce que le dispositif de chauffage (26) et chaque capteur (22,24) comprennent un élément résistif possédant un motif réalisé en un matériau résistif et formé suivant des lignes ayant une certaine largeur, ces lignes étant séparées sensiblement par une largeur de ligne, et les capteurs étant séparés du dispositif de chauffage par une distance située dans la gamme comprise entre environ une largeur de ligne et environ cinq largeurs de ligne.

13. Procédé pour fabriquer un dispositif semiconducteur à diaphragme fendu selon l'une des revendications précédentes, caractérisé par les étapes consistant à:

a) prévoir un corps semiconducteur (20) possédant une première surface (36) ayant une orientation prédéterminée par rapport à une structure cristalline du corps semiconducteur;

b) appliquer une couche (29) du matériau en forme de pellicule mince, dont est constitué le diaphragme (32), sur la première surface (36);

c) mettre à nu une zone de la première surface de manière à former au moins une fente dans la couche du matériau en forme de pellicule mince, avec

c1) la ou les fentes s'étendant en travers du diaphragme d'une extrémité à l'autre,

c2) la ou les fentes étant sensiblement centrées sur le diaphragme,

c3) la ou les fentes possédant des première et seconde extrémités (200A,200B) recoupant la première surface (36) du corps semiconducteur (20); et

c4) la ou les fentes étant orientée de telle sorte que, lorsqu'un agent corrosif anisotrope est placé dans la fente lors de la fabrication du dispositif afin de former le renfoncement (30), cet agent corrosif réalise une corrosion sous-jacente au-dessous du diaphragme (32) jusqu'à ce qu'elle atteigne une surface cristalline résistante à cet agent corrosif;

d) appliquer la corrosion anisotrope à la zone à nu de la surface pour réaliser une corrosion sous-jacente au-dessous du diaphragme (32) et créer le renfoncement (30).

14. Procédé selon la revendication 13, caractérisé par les étapes consistant à :

prévoir un corps semiconducteur (20) formé de silicium (100) et possédant un plan (100) et une direction [110], la première surface (36) du corps semiconducteur étant sensiblement parallèle au plan (100);

prévoir une couche (29) du matériau en forme de pellicule mince, dont est constitué le diaphragme, sur la première surface (36);

mettre à nu une zone de la première surface à travers une fente ménagée dans la couche du matériau en forme de pellicule mince, cette fente étant orientée sensiblement à 45° par rapport à la direction [110], la fente possédant une longueur déterminant la largeur maximale du renfoncement telle qu'elle est mesurée le long de la fente orientée sensiblementà 45° par rapport à la direction [110]; et

appliquer une corrosion anisotrope à la zone à nu de la surface pour réaliser une corrosion sous-jacente au-dessous du diaphragme et créer le renfoncement.

15. Procédé selon la revendication 14 pour fabriquer un dispositif semiconducteur à diaphragme fendu, selon lequel le renfoncement est limité au niveau de la première surface par une configuration sensiblement carrée comprenant quatre bords limites sensiblement perpendiculaires (111,113), chacun des quatre bords limites sensiblement perpendiculaires étant sensiblement aligné avec ou sensiblement perpendiculaire à une direction [110] à l'intérieur du corps semiconducteur; caractérisé par les étapes consistant à

mettre à nu des première et seconde zones de la première surface à travers des première et seconde fentes dans la couche du matériau en forme de pellicule mince, les première et seconde fentes étant situées sur une droite orientée sensiblement à 45° par rapport à la direction [110], chacune des première et seconde fentes comprenant une première extrémité située à une largeur maximale du renfoncement, telle que mesurée le long de la droite orientée sensiblement à 45° par rapport à la direction [110], chacune des première et seconde fentes possédant une seconde extrémité située de telle sorte que chacune des première et seconde fentes s'étend uniquement sur une partie de la distance de l'étendue en largeur maximale du renfoncement, mesurée le long de la droite orientée sensiblement à 45° par rapport à la direction [110];

mettre à nu des troisième, quatrième, cinquième et sixième zones de la première surface à travers des première, quatrième et cinquième fentes sensiblement alignées avec ou sensiblement perpendiculaires à la direction [110], l'une des troisième, quatrième, cinquième et sixième fentes étant située sensiblement au centre de chacun des quatre bords limites, et chacune des troisième, quatrième, cinquième et sixième fentes possédant une longueur suffisante pour permettre une corrosion sous-jacente au-dessous du diaphragme lorsqu'une corrosion anisotrope est établie dans chacune des six fentes; et

appliquer la corrosion anisotrope dans les zones à nu de la surface pour réaliser une corrosion sous-jacente au-dessous du diaphragme et créer le renfoncement.

## Ansprüche

1. Integrierte Halbleitervorrichtung mit:

einem Halbleiterkörper (20) mit einer ersten Oberfläche (36), die bezogen auf eine Kristallstruktur im Halbleiterkörper eine vorgegebene Orientierung aufweist, und wobei der Halbleiterkörper mit einer in der ersten Oberfläche gebildeten Vertiefung (30) versehen ist; einer Schicht (29) aus dielektrischem Dünnfilmmaterial, welches wenigstens einen Teil der ersten Oberfläche (36) bedeckt; und

einer die Vertiefung (30) im wesentlichen überdeckenden Membran (32), welche die Schicht (29) aus Dünnfilmmaterial enthält und ferner ein Umformerelement (22, 24, 26) umfaßt;

**dadurch gekennzeichnet, daß**

a) die Membran (32) wenigstens einen sich von einem Ende der Membran zum anderen erstreckenden Schlitz (82; 82A, 82B) aufweist;

b) der wenigstens eine Schlitz in der Mitte der Membran vorgesehen ist und erste und zweite äußere Enden (200A, 200B) aufweist, welche die erste Oberfläche (36) des Halbleiterkörpers (20) schneiden; und

c) dieser wenigstens eine Schlitz derart orientiert ist, daß, wenn bei der Herstellung der Vorrichtung zum Bilden der Vertiefung (30) eine anisotrope Ätzlösung auf den Schlitz aufgebracht wird, diese Ätzlösung die Membran (32) soweit hinterschneidet, bis sie eine für die Ätzlösung resistente Kristallfläche erreicht.

2. Vorrichtung nach Anspruch 1, **dadurch gekennzeichnet**, daß der Halbleiterkörper (20) aus (100) Silizium besteht und eine (100)-Ebene sowie eine [110]-Achse aufweist und wobei die erste Oberfläche (36) des Halbleiterkörpers parallel zur (100)-Ebene verläuft; und daß der Schlitz (82) unter etwa 45° zur [110]-Achse verläuft und sich etwa in der Mitte der Vertiefung (30) über diese erstreckt.

3. Vorrichtung nach Anspruch 1 oder 2, **dadurch gekennzeichnet**, daß die Vertiefung (30) an der ersten Oberfläche (36) durch eine praktisch quadratische Konfiguration mit vier etwa rechtwinkligen Begrenzungskanten (111, 113) begrenzt wird, wobei jede der vier praktisch rechtwinkligen Begrenzungskanten entweder im wesentlichen parallel oder im rechten Winkel zur [110]-Achse verläuft;
daß die geschlitzte Membran (32) erste und zweite Schlitze (82A, 82B) längs einer Linie (83) aufweist, welche unter etwa 45° gegenüber der [110]-Achse verläuft;
daß jeder der ersten und zweiten Schlitze (82A, 82B) ein zweites Ende (202A, 202B) solche Lage aufweist, daß sich jeder der ersten und zweiten Schlitze nur über einen Teil der Entfernung über die längs der unter etwa 45° gegenüber der [110]-Achse orientierten Linie (83) gemessenen maximalen Breite der Vertiefung erstreckt;
daß weiterhin dritte, vierte, fünfte und sechste Schlitze (82C bis 82F) vorgesehen und praktisch parallel oder senkrecht zur [110]-Achse orientiert sind, wobei einer der dritten, vierten, fünften oder sechsten Schlitze etwa in der Mitte jeder der vier Begrenzungskanten (111, 113) angeordnet ist; und
daß jeder der dritten, vierten, fünften und sechsten Schlitze (82C bis 82F) eine Länge hat, die ausreicht, um ein Hinterschneiden der Membran zu ermöglichen, wenn eine anisotrope Ätzlösung auf jedem der sechs Schlitze aufgebracht wird.

4. Vorrichtung nach Anspruch 3 zur Verwendung als Strömungsfühler, **gekennzeichnet durch** einen von der Membran (32) über der Vertiefung (30) getragenen Dünnschichtheizer (26), wobei etwa die Hälfte des Heizers zu beiden Seiten des Schlitzes (82) liegt; und zwei von der Membran getragenen Dünnschicht-Temperaturfühlern (22, 24), die zu beiden Seiten des Heizers (26) vorgesehen sind.

5. Vorrichtung nach Anspruch 4, **dadurch gekennzeichnet**, daß der Heizer (26) bei einer über der Umgebungstemperatur liegenden Temperatur betrieben wird, so daß bei fehlender Strömung ein Temperaturgradient über und neben dem Heizer entsteht und die Temperatur innerhalb dieses strömungsfreien Gradienten einen Übergang zwischen der erhöhten Temperatur und im wesentlichen der Umgebungstemperatur herstellt;
und daß die Fühler (22, 24) genügend nahe beim Heizer (26) derart angeordnet sind, daß sie sich innerhalb des strömungsfreien Temperaturgradienten befinden.

6. Vorrichtung nach Anspruch 4 oder 5, **dadurch gekennzeichnet,** daß die nahen Enden der Fühler (22, 24) von den nahen Enden des Heizers (26) innerhalb einer Entfernung von etwa 5 μm bis 25 μm angeordnet sind.

7. Vorrichtung nach einem der Ansprüche 1 bis 6, **dadurch gekennzeichnet**, daß das Umformerelement (22, 24, 26) ein Permalloy-Element enthält.

8. Vorrichtung nach Anspruch 7, **dadurch gekennzeichnet**, daß das Permalloy-Element eine Dicke in der Größe von 800 bis 1600 Angström aufweist.

9. Vorrichtung nach einem der Ansprüche 1 bis 8, **dadurch gekennzeichnet**, daß die Schicht (29) aus Dünnfilmmaterial ein dielektrisches Material, vorzugsweise Siliziumnitrid enthält.

10. Vorrichtung nach Anspruch 9, **dadurch gekennzeichnet**, daß das dielektrische Material eine Dicke im Bereich von 0,8 μm bis 1,2 μm hat.

11. Vorrichtung nach einem der Ansprüche 4 bis 10, **dadurch gekennzeichnet**, daß jedes Permalloy-Element (22, 24, 26) bei 25° einen Widerstandswert im Bereich von 200 Ohm bis 2000 Ohm hat.

12. Vorrichtung nach einem der Ansprüche 4 bis 11, **dadurch gekennzeichnet**, daß der Heizer (26) und jeder Sensor (22, 24) ein Widerstandselement aus einem Muster von in Bahnen angeordnetem Widerstandsmaterial umfaßt, wobei diese Bahnen eine Bahnbreite haben und etwa im gegenseitigen Abstand einer Bahnbreite angeordnet sind, und wobei die Fühler vom Heizer in einer Entfernung von etwa einer bis fünf Bahnbreiten angeordnet sind.

13. Verfahren zum Herstellen einer Halbleitervorrichtung mit geschlitzter Membran gemäß einem der vorangehenden Ansprüche, **gekennzeichnet durch** folgende Schritte:
a) Bereitstellung eines Halbleiterkörpers (20) mit einer ersten Oberfläche vorgegebener Orientierung in bezug auf eine Kristallstruktur im Halbleiterkörper;
b) Aufbringen einer Schicht (29) aus die Membran (32) bildendem Dünnfilmmaterial auf die erste Oberfläche (36);
c) Belichten eines Bereichs der ersten Oberfläche um wenigstens einen Schlitz in der Schicht aus Dünnfilmmaterial zu bilden, wobei
c1) der wenigstens eine Schlitz sich von einem Ende der Membran zum anderen über die Membran erstreckt;
c2) der wenigstens eine Schlitz praktisch in der Mitte der Membran angeordnet ist,
c3) der wenigstens eine Schlitz erste und zweite äußere Enden (200A, 200B) aufweist, welche die erste Oberfläche (36) des Halbleiterkörpers (20) schneiden, und
c4) der wenigstens eine Schlitz derart orientiert ist, daß, wenn bei der Herstellung der Vorrichtung eine anisotrope Ätzlösung zwecks Bildung der Vertiefung (30) auf den Schlitz aufgebracht wird, diese Ätzlösung die Membran (32) soweit hinterschneidet, bis die Ätzlösung eine gegenüber dieser resistente Kristallfläche erreicht;
d) Aufbringen der anisotropen Ätzlösung auf den belichteten Oberflächenbereich, um die Membran (32) zu hinterschneiden und die Vertiefung (30) zu bilden.

14. Verfahren nach Anspruch 13, **gekennzeichnet durch** folgende Schritte:
Bereitstellen eines Halbleiterkörpers (20) aus (100)-Silizium mit einer (100)-Ebene und einer [110]-Achse, wobei die erste Oberfläche (36) des Halbleiterkörpers praktisch parallel zur (100)-Ebene liegt;
Aufbringen einer Schicht (29) aus die Membran bildendem Dünnfilmmaterial auf die erste Oberfläche (36);
Belichten eines Flächenbereichs der ersten Oberfläche durch einen Schlitz in der Schicht aus Dünnfilmmaterial, wobei der Schlitz sich etwa unter 45° bezogen auf die [110]-Achse erstreckt und eine Länge hat, welche die maximale Breite der Vertiefung bestimmt, gemessen längs des sich praktisch unter 45° gegenüber der [110]-Achse erstreckenden Schlitzes; und
Aufbringen einer anisotropen Ätzlösung auf den belichteten Oberflächenbereich, um die Membran zu hinterschneiden und die Vertiefung zu bilden.

15. Verfahren nach Anspruch 14 zum Herstellen einer Halbleitervorrichtung mit geschlitztem Membran, wobei die Vertiefung in der ersten Oberfläche durch eine praktisch quadratische Konfiguration begrenzt wird, die aus vier rechtwinklig zueinander angeordneten Begrenzungskanten (111, 113) besteht und wobei jede der vier praktisch rechtwinkligen Begrenzungskanten im wesentlichen parallel bzw. rechtwinklig zur [110]-Achse des Halbleiterkörpers verläuft, **gekennzeichnet durch** folgende Schritte:
Belichten erster und zweiter Oberflächenbereiche der ersten Oberfläche durch erste und zweite Schlitze in der Schicht aus Dünnfilmmaterial, wobei die ersten und zweiten Schlitze sich längs einer Linie erstrecken, die unter etwa 45° gegenüber der [110]-Achse verläuft, jeder der ersten und zweiten Schlitze ein erstes Ende im Bereich der maximalen Breite der Vertiefung aufweist, gemessen längs der sich unter etwa 45° gegenüber der [110]-Achse orientierten Linie, und jeder der ersten und zweiten Schlitze ein zweites Ende hat, welches derart angeordnet ist, daß die ersten und zweiten Schlitze sich nur über einen Teil der Entfernung über die maximale Breite der Vertiefung erstrecken, wiederum gemessen längs der um 45° gegenüber der [110]-Achse orientierten Linie;
Belichten dritter, vierter, fünfter und sechster Flächenbereiche der ersten Oberfläche durch dritte, vierte, fünfte und sechste Schlitze, die sich praktisch parallel oder rechtwinklig zur [110]-Achse erstrecken, wobei einer der dritten, vierten, fünften und sechsten Schlitze sich etwa in der Mitte jeder der vier Begrenzungskanten befindet und die dritten, vierten, fünften und sechsten Schlitze eine Länge haben, welche ausreicht, um ein Hinterschneiden der Membran zu ermöglichen, wenn eine anisotrope Ätzlösung auf jedem der sechs Schlitze aufgebracht wird; und
Aufbringen der anisotropen Ätzlösung auf die belichteten Oberflächenbereiche, um die Membran zu hinterschneiden und die Vertiefung zu erzeugen.

Fig. 1

Fig. IA

Fig. IB

Fig. 2

Fig. 3

Fig. 4